# EUROPÄISCHE PATENTANMELDUNG

(11) **EP 4 518 101 A1**
(43) Veröffentlichungstag der Anmeldung: **05.03.2025**
(21) Anmeldenummer: 23194324.2
(22) Anmeldetag: 30.08.2023
(51) Int. Cl.: H02K 1/02

(54) **MAGNETBLECH, ROTOR FÜR EINE ELEKTRISCHE MASCHINE UND ELEKTRISCHE MASCHINE**

(71) Anmelder: Siemens Aktiengesellschaft, 80333 München (DE)
(72) Erfinder: Steinkopff, Thorsten, 85586 Poing (DE); Rieger, Gotthard, 80636 München (DE); Vollmer, Rolf, 36129 Gersfeld (DE)
(74) Vertreter: Siemens Patent Attorneys

(57) **Zusammenfassung**

Die Erfindung betrifft ein rotationssymmetrisches Magnetblech für einen Rotor eines Elektromotors, insbesondere eines Reluktanzmotors,
- das aus mindestens zwei Materialkomponenten (6, 8) zusammengesetzt ist,
- einer ersten Materialkomponente (6), die einen weichmagnetischen Werkstoff umfasst und
- einer zweiten Materialkomponente (8) die einen amagnetischen Werkstoff umfasst,
- wobei die zweite Materialkomponente (8) diametral entlang einer Achse, einer sogenannten d-Achse (10) verläuft, wobei mindestens zwei dieser d-Achsen (10) vorgesehen sind,
- die wiederum mindestens vier magnetische Bereiche (12) einschließen, die jeweils durch die weichmagnetische erste Materialkomponente (6) ausgebildet sind,
- die bezüglich eines Magnetblechmittelpunktes (14), der auch den Mittelpunkt einer Wellenbohrung (16) des Magnetblechs (2) bildet, konkav bogenförmig verlaufen,
dadurch gekennzeichnet, dass
- mindestens eine Entlastungsaussparungen (18) vorgesehen ist, die von der d-Achse (10) geschnitten wird und zu dieser symmetrisch ist, wobei
- die Wellenbohrung (16) und die Entlastungsaussparung (18) durch einen amagnetischen Materialbereich (20) voneinander getrennt sind.

## Beschreibung

Die Erfindung betrifft ein Magnetblech nach dem Patentanspruch 1, einen Rotor nach Patentanspruch 15 sowie eine elektrische Maschine nach Patentanspruch 16.

Ein neues Verfahren zur Herstellung von Magnetblechen für elektrische Maschinen stellt der Sieb- oder der Schablonendruck dar. Dies kann als additives Herstellungsverfahren angesehen werden. Hierbei wird mittels einer Schablone, bei der die offenen Bereiche auch mit einem Sieb versehen sein können, eine Druckpaste auf ein Substrat gedruckt. Man spricht hierbei von Schablonendruck oder Siebdruck, wobei der Schablonendruck ein Oberbegriff des Siebdrucks ist. Die Druckpaste enthält neben Lösungsmitteln und / oder Bindemitteln Metallpulver, die funktional im späteren Bauteil wirken. Durch die Siebdrucktechnik wird ein Grünkörper hergestellt, der nach einer weiteren thermischen Behandlung zunächst in der Regel entbindert wird und anschließend bei einer höheren Temperatur einem Sinterprozess zugeführt wird, wobei die metallischen Pulverkörner so miteinander versintern, dass ein strukturiertes Blech, das Magnetblech, entsteht.

Zur Erzielung einer höheren mechanischen Festigkeit solcher Bleche, insbesondere bei hohen Drehzahlen von Rotoren elektrischer Maschinen, gewinnt nun die Herstellbarkeit von Zweikomponenten-Magnetblechen immer mehr an Bedeutung. Ein Beispiel hierfür ist in der EP 3 932 591 A1 beschrieben. Ein grundsätzliches Problem bei derartigen Zweikomponenten-Magnetblechen, die im Schablonendruckverfahren hergestellt werden, besteht darin, dass die unterschiedlichen Materialien, wenn sie einerseits gute magnetische Eigenschaften haben und auf der anderen Seite eine hohe Festigkeit aufweisen, in der Regel unterschiedliche thermische Ausdehnungskoeffizienten aufweisen. So hat beispielsweise ein hochfester Stahl, der zur mechanischen Festigkeit des Magnetblechs eine Teilkomponente darstellt, einen Ausdehnungskoeffizienten von 16 × 10⁻⁶ K⁻¹. Ein weiterer weichmagnetischer Werkstoff hat dabei in einer Temperaturspanne zwischen 0 und 100° C einen thermischen Ausdehnungskoeffizienten, der zwischen 10 - 12 × 10⁻⁶ K⁻¹ liegt. Bei der gemeinsamen Sinterung derartig unterschiedlicher Materialkomponenten bzw. Materialpaarungen in einem Grünkörper zu einem Magnetblech kommt es insbesondere bei der Abkühlung von den Sintertemperaturen zur Raumtemperatur aufgrund dieser unterschiedlichen thermischen Ausdehnungskoeffizienten zur Ausbildung von hohen mechanischen Spannungen in den Verbindungs- bzw. Nahtbereichen zwischen diesen Materialkomponenten. Dies kann zu Verwölbungen oder zu Rissen oder insgesamt zu mechanischen Spannungen im Magnetblech führen, die die mechanischen oder magnetischen Eigenschaften deutlich verschlechtern können.

Eine typische elektrische Maschine in Form eines Reluktanzmotors, bei dem der Rotor aus einkomponentigen Magnetblechen aufgebaut ist in der EP 2 790 296 A1 beschrieben. Solche Aufbauten stellen stets einen Werkstoff-Kompromiss zwischen hoher Festigkeit und guten magnetischen Eigenschaften des Magnetblechmaterials dar. Insbesondere kommt es aber stets zu magnetischen Streuflüssen zwischen den einzelnen magnetischen Polen, die die Leistungsfähigkeit des Motors reduzieren.
Die Aufgabe der Erfindung besteht darin, ein Magnetblech sowie einen Rotor für eine elektrische Maschine und eine elektrische Maschine bereitzustellen, wobei das Magnetblech gegenüber dem Stand der Technik bei Anwendung von mindestens zwei Materialkomponenten innerhalb des Magnetblechs eine höhere Festigkeit sowie weniger intrinsische Spannungen aufweist.

Die Lösung der Aufgabe besteht in einem Magnetblech-Halbzeug nach Patentanspruch 1, einem Magnetblech nach Patentanspruch 14, einem Rotor nach Patentanspruch 15 sowie einer elektrischen Maschine nach Patentanspruch 16.

Das rotationssymmetrische Magnetblech gemäß Patentanspruch 1 für einen Rotor einer elektrischen Maschine umfasst mindestens zwei Materialkomponenten, wobei eine erste Materialkomponente einen magnetischen Werkstoff umfasst und eine zweite Materialkomponente einen amagnetischen Werkstoff umfasst. Dabei verläuft die zweite Materialkomponente in einer Draufsicht auf einer Topografie des Magnetblechs diametral einer Achse, die radial durch den Mittelpunkt des rotationssymmetrischen Magnetblechs verläuft und die in der elektrotechnischen Beschreibung von elektrischen Maschinen auch als d-Achse bezeichnet wird, und wobei von diesen d-Achsen mindestens zwei vorgesehen sind. Diese zwei d-Achsen sind so angeordnet, dass zwischen ihnen mindestens vier magnetische Bereiche verlaufen. Diese magnetischen Bereiche sind wiederum durch die magnetische erste Materialkomponente ausgebildet. Die magnetischen Bereiche sind so ausgestaltet, dass sie bezüglich eines Magnetblechmittelpunktes konkav bogenförmig verlaufen. Das Magnetblech zeichnet sich dadurch aus, dass mindestens eine Entlastungsaussparungen 18 vorgesehen sind, die von der d-Achse geschnitten wird und zu dieser symmetrisch ist, wobei - die Wellenbohrung 16 und die Entlastungsaussparung 18 durch einen amagnetischen Materialbereich 20 voneinander getrennt sind.

Der Vorteil gegenüber einem herkömmlichen, mindestens zweikomponentigen Magnetblech aus dem Stand der Technik besteht darin, dass thermische Spannungen bzw. mechanische Spannungen, die in dem Magnetblech auftreten können, minimiert werden. Thermische und mechanische Spannungen sind Spannungen, die während des Betriebs des Magnetblechs in seiner Funktion als Bestandteil des Rotors auftreten. Hier können Temperaturen von über 100° C vorherrschen, was zu erhebliche thermische Spannungen an Grenzlinien zwischen dem magnetischen Bereich der ersten Komponenten und dem amagnetischen Bereich der zweiten Komponente hervorrufen kann. Für die Kompensation dieser thermisch induzierten mechanischen Spannungen dienen die genannte mindestens eine Entlastungsaussparung, die von der d-Achse geschnitten wird (bevorzugt liegt auf jeder d-Achse eine Entlastungsaussparung) und zu dieser symmetrisch ist. Diese Erkenntnis ist aufgrund von Simulationsberechnungen entstanden, die mechanische und thermische Spannungen im Bereich dieser Materialgrenzen beschreiben und die aufgrund der beschriebenen Entlastungsaussparungen an den Materialgrenzen minimiert werden. Entlastungsaussparungen sind zwar schon im Stand der Technik genannte, diese verlaufen aber entlang der Grenzlinie. Erst die Erkenntnis, dass diese Entlastungsaussparungen auf der d-Achse angeordnet sein müssen und zu dieser symmetrisch ausgestaltet sein müssen, hat zu einer erheblichen Reduktion der Spannungen im Magnetblech geführt.

Eine besonders vorteilhafte geometrische Ausformung der Entlastungsaussparungen besteht darin, wenn die Entlastungsaussparung bezüglich des Magnetblechmittelpunktes konvex geformt ist. Insbesondere sind sie dabei in Form von Ringsegmenten ausgebildet, die konzentrisch zur Wellenbohrung verlaufen. Diese Ausgestaltung führt zu einer weiteren vorteilhaften Reduktion von mechanischen Spannungen, beispielsweise im Vergleich zu reinen kreisförmigen Aussparungen. Diese Ringsegmente sind dabei bevorzugt an ihren Segmentenden konvex abgerundet (geformt wie ein gekrümmtes Langloch), was zu einer weiteren Spannungsreduktion auch an den Enden der Aussparungen führt.

Auch die Größe der Entlastungsaussparungen hat sich als eine Variable für die Reduktion der auftretenden Spannungen herausgestellt. Es ist vorteilhaft, wenn die Entlastungsaussparungen in ihrer größten Ausdehnung 1 % des Magnetblechdurchmessers, insbesondere 2 % überschreiten. Diese Mindestgröße führt zu signifikanten Spannungsreduktionen. Im Gegenzug sollten die Entlastungsaussparungen nicht größer als 10 % insbesondere nicht größer als 5 % des Magnetblechdurchmesser sein, da ansonsten eine mechanische Schwächung des Magnetblechs in den Vordergrund rückt.

Dabei seien die in den Ansprüchen verwendeten Begriffe wie folgt definiert: Das Magnetblech ist, wie bereits erwähnt, ein ebenes Gebilde, das durch ein additives Verfahren, insbesondere ein Sieb- oder Schablonendruckverfahren oder auch durch ein Tape Casting-Verfahren sehr dünn hergestellt wird. Es hat dabei üblicherweise eine Dicke zwischen 80 µm und 200 µm. Die hierzu benannte d-Achse verläuft somit in der ebenen Fläche des Magnetbleches durch dessen Mittelpunkt. Das beschriebene Magnetblech ist aus mindestens zwei Materialkomponenten aufgebaut, wobei die erste Materialkomponente einen magnetischen Werkstoff, insbesondere einen weichmagnetischen Werkstoff umfasst. Ein weichmagnetischer Werkstoff zeichnet sich dadurch aus, dass elementare Magnetisierungsprozesse sowie Wandverschiebungen und Drehprozesse der einzelnen Domänen und Körner leicht und ungehemmt ablaufen. Dies führt dazu, dass der magnetische Werkstoff leicht auf- und ummagnetisiert werden kann. Dies steht im Gegensatz zu hartmagnetischen Werkstoffen, die sich durch eine hohe Koerzitivfeldstärke und eine ausgeprägte Hystereseschleife auszeichnen. Weichmagnetische Werkstoffe, die ihre Polarisierung bereits durch geringe Magnetfelder erhalten oder ändern können, sind insbesondere in Rotoren von Reluktanzmotoren, die keine zusätzlichen Wicklungen oder Dauermagneten aufweisen, von Vorteil.

Amagnetische oder nicht magnetische Werkstoffe (beide Begriffe sind äquivalent) sind insbesondere Werkstoffe, die nicht ferromagnetisch sind. Sie können paramagnetisch oder diamagnetisch sein. Es hat sich zur Definition der Größe als vorteilhaft herausgestellt, dass die Sättigungsmagnetisierung des amagnetischen bzw. nicht magnetischen Werkstoffs der zweiten Materialkomponenten weniger als 10 % der Sättigungsmagnetisierung des magnetischen Werkstoffs der ersten Materialkomponente beträgt. Insbesondere sollte diese nicht mehr als 5 % der Sättigungsmagnetisierung der ersten Materialkomponente betragen.

Die Grenze zwischen den beiden Materialkomponenten erscheint bei einer Draufsicht auf das Magnetblech als Linie und wird somit als Grenzlinie bezeichnet. Die Höhe der Grenzlinie entspricht der Höhe des Magnetblechs, bevorzugt zwischen 80 µm und 200 µm. Die Grenzlinie ist dabei herstellungsbedingt (auf was noch eingegangen wird) keine diskrete Linie, vielmehr handelt es sich um eine Zone, in der die unterschiedlichen Materialkomponenten aufeinandertreffen und miteinander aufgrund diffusionsinduzierter Prozesse während des Sintervorgangs miteinander verbunden sind. Somit weist die Grenzlinie die Breite einer Diffusionszone auf, die je nach Materialien bis zu einem mm betragen kann.

Der Vorteil der vorliegenden Erfindung gegenüber herkömmlichen einkomponentigen Magnetblechen und den daraus erstellen Rotoren bzw. elektrischen Maschinen besteht darin, dass die amagnetische Materialkomponente entlang der beschriebenen d-Achsen die Bildung von Streuflüssen zwischen den einzelnen magnetischen Bereichen minimiert. Derartige Streuflüsse finden in herkömmlichen Monomaterialien, die zur Bildung der Rotoren nach dem Stand der Technik hauptsächlich herangezogen werden, immer statt. Sie können zwar durch konstruktive Merkmale reduziert werden, eine Minimierung, wie sie durch den beschriebenen zweikomponentigen Aufbau mit dem amagnetischen Werkstoff erfolgt, ist jedoch mit einem Monomaterial nicht zu realisieren. Dort werden magnetische Streuflüsse immer durch das weichmagnetische Material geführt und sind nicht zu vermeiden. Durch die beschriebene Maßnahme ist es möglich, in elektrischen Maschinen der beschriebenen Art, insbesondere bei Reluktanzmotoren das maximale Drehmoment am Motor erheblich zu erhöhen.

Es kann zweckmäßig sein, dass der Aufbau des Rotors und somit des Magnetblechs eine Vielzahl von magnetischen Bereichen aufweist, wobei die Anzahl der magnetischen Bereiche 2 × n der Anzahl der Achsen beträgt, wobei n eine natürliche Zahl ist. Es handelt sich somit immer um eine geradzahlige Anzahl von magnetischen Bereichen, die bei bestimmten Motoraufbauten auch durchaus über 100 liegen kann.

In einer weiteren Ausgestaltungsform der Erfindung weist das Halbzeug eine zentrale Wellenbohrung auf, wobei die Wellenbohrung durchgehend von einem amagnetischen Material umgeben ist. Dies dient insbesondere der zentralen Festigkeit des Magnetenmaterials, da das amagnetische Material, wie noch näher beschrieben werden wird, eine höhere mechanische Festigkeit aufweist. Somit ist durch diese Maßnahme insbesondere entlang der Wellenbohrung und der darin enthaltenen Drehwelle des Rotors eine hohe mechanische Festigkeit gewährleistet. Dies unterscheidet das erfindungsgemäße Magnetblech und den daraus entstehenden Rotor von einem Monomaterial-Rotor, wie er im Stand der Technik üblich ist.

Es ist üblich, dass die Winkelhalbierenden zweier benachbarter d-Achsen als q-Achsen bezeichnet sind. Die weichmagnetischen Bereiche sind in einer vorteilhaften Ausgestaltungsform symmetrisch zu den q-Achsen, und zwar konkav zum Mittelpunkt des Magnetblechs bzw. Magnetblech-Halbzeuges ausgestaltet. Durch diese geometrische Ausgestaltung wird der Magnetfluss durch magnetischen Bereich für die Rotationsbewegung optimal gelenkt. Auch die q-Achsen verlaufen radial durch den Mittelpunkt des Halbzeugs.

In einer weiteren Ausgestaltungsform der Erfindung ist die erste Materialkomponente eine Eisenlegierung, die mindestens 95 Gew.-%, insbesondere mindestens 97 Gew.-% und ganz besonders bevorzugt mindestens 99 Gew.-% Eisen aufweist. Im Idealfall handelt es sich dabei um Reineisen, da Reineisen die beste ferritische Gefügestruktur oder martensitische Gefügestruktur aufweist und dabei sehr gute weichmagnetische Eigenschaften umfasst, die für die jeweilige Ummagnetisierung bei einer elektrischen Maschine vorteilhaft sind.

Die zweite, amagnetische Materialkomponente umfasst eine Eisen-Chrom-Legierung, die auch eine mechanisch tragende Materialkomponente darstellt. Diese weist bevorzugt einen Chromanteil zwischen 10 Gew. % und 20 Gew. %, insbesondere zwischen 12 Gew. % und 18 Gew. % auf. Das Chrom ist dabei ein Ferritbildner, der bei einer entsprechenden Abkühlung aus dem Sinterprozess die Ausbildung von Ferritkristallen begünstigt.

Ferner weist die Legierung einen Nickelanteil auf, der zwischen 4 Gew. % und 10 Gew. % beträgt, insbesondere zwischen 6 Gew.% und 8 Gew.%. Nickel ist ein sogenannter Austenitbildner, der bei der Abkühlung eine austenitischen Phasenbestandteile begünstigt. Beide Phasenbestandteile, Austenit und Ferrit, sind bevorzugte Bestandteile im Gleichgewicht der zweiten Materialkomponente, da durch die beschriebenen Verhältnisse sowohl mechanische Festigkeiten als auch weichmagnetisches Verhalten verhindert wird. Derartige Chrom-Nickel-Stähle, die auch als Duplex-Stähle bekannt sind, weisen neben einer hohen Zugfestigkeit auch eine verhältnismäßig hohe Duktilität auf, weshalb sie besonders gut als tragende Komponente für das beschriebene Magnetblech geeignet sind.

Ferner umfasst die Eisen-Chrom-Legierung in vorteilhaften Ausgestaltungsformen sowohl Molybdän in Anteilen zwischen 2 Gew. % und 5 Gew. %, insbesondere zwischen 3 Gew. % und 4 Gew. %. Der Anteil an Wolfram beträgt bevorzugt zwischen 0,3 Gew. % und 1,2 Gew. %, insbesondere zwischen 0,5 Gew.% und 1 Gew.%. Die beiden zuletzt genannten Legierungsbestandteile Molybdän und Wolfram tragen zum einen zu einer höheren Festigkeit der Legierung bei, zum anderen sind sie dazu geeignet, insbesondere den gewünschten Ausdehnungskoeffizienten, der nahe an den der magnetischen Komponente liegt, einzustellen.

Ein weiterer Bestandteil der Erfindung ist eine elektrische Maschine, die einen Rotor nach Anspruch 14 umfasst, wobei diese elektrische Maschine in einer besonderen Ausgestaltungsform der Erfindung ein Reluktanzmotor nach Anspruch 15 ist.

Weitere Ausgestaltungsformen und weitere Merkmale der Erfindung werden anhand der folgenden Figuren näher erläutert. Dabei handelt es sich lediglich um schematische Ausgestaltungsformen, die keine Einschränkung des Schutzbereichs darstellen. Merkmale, die den Stand der Technik beschreiben und dieselbe Bezeichnung haben, wie sie auch in Bezug auf die Erfindung verwendet werden, sind mit einem Hochstrich versehen.

Dabei zeigen:
Figur 1 eine schematische Draufsicht auf ein zweikomponentiges Magnetblech nach dem Stand der Technik,
Figur 2 eine Simulationsdarstellung von auftretenden mechanischen Spannungen in einem Zweikomponenten-Magnetblech nach dem Stand der Technik,
Figur 3 Magnetblech mit Entlastungsaussparungen,
Figur 4 eine Simulationsdarstellung von auftretenden mechanischen Spannungen in einem Zweikomponenten-Magnetblech nach Figur 3 oder 5
Figur 5 ein Magnetblech analog zu Figur 3 mit einer anderen Ausgestaltung von amagnetischen Beriechen,
Figur 6 ein Magnetblech analog zu Figur 3 mit einer anderen Ausgestaltung von Entlastungsaussparungen,
Figur 7 eine Simulationsdarstellung von auftretenden mechanischen Spannungen in einem Zweikomponenten-Magnetblech nach Figur 6,
Figur 8 ein Blechpaket bzw. einen Magnetblechstapel einer Vielzahl von Magnetblechen aus einer der vorhergehenden Zeichnungen,
Figur 9 einen Querschnitt durch einen Rotor mit einem Blechpaket,

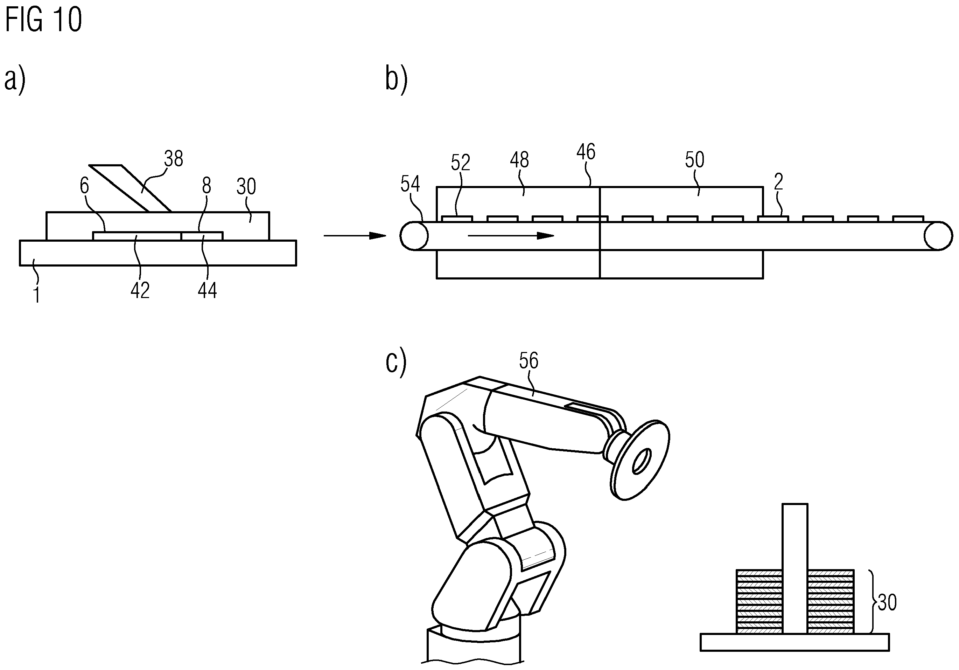

Figur 10 eine schematische Darstellung der Herstellung eines zweikomponentigen Magnetbleches.

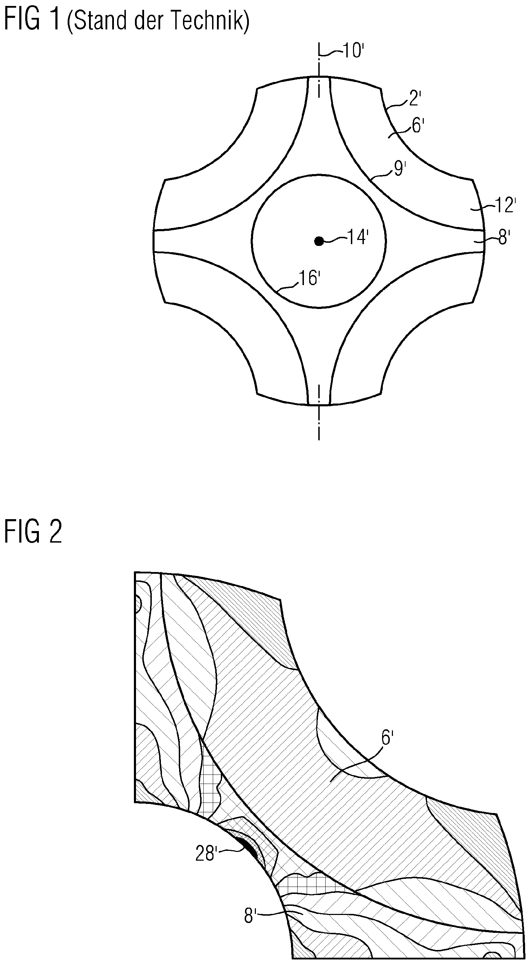

In Figur 1 ist ein herkömmliches Magnetblech 2' aus dem Stand der Technik dargestellt. Dieses Magnetblech 2' ist insbesondere für einen Reluktanzmotor geeignet und weist dabei zwei Materialkomponenten auf: eine erste Materialkomponente 6' und eine zweite Materialkomponente 8`. Ferner ist eine Wellenbohrung 16' vorgesehen, die um einen Mittelpunkt 14' des rotationssymmetrischen Magnetblechs 2' verläuft.

In Figur 2 ist eine Simulationsdarstellung von mechanischen Spannungen des Magnetblechs 2' gemäß des Standes der Technik aus Figur 1 dargestellt. Es sind die Materialbereiche 6' aus magnetischem Material und 8` aus amagnetischem Material dargestellt und es ist zu erkennen, dass im Bereich der Wellenbohrung 16' erhebliche mechanische Spannungen 28` auftreten, die bei einer mechanischen Belastung des Magnetblechs 2' während des Betriebs zu einem Bruch oder einer Aufwölbung des Magnetblechs 2' führen können.

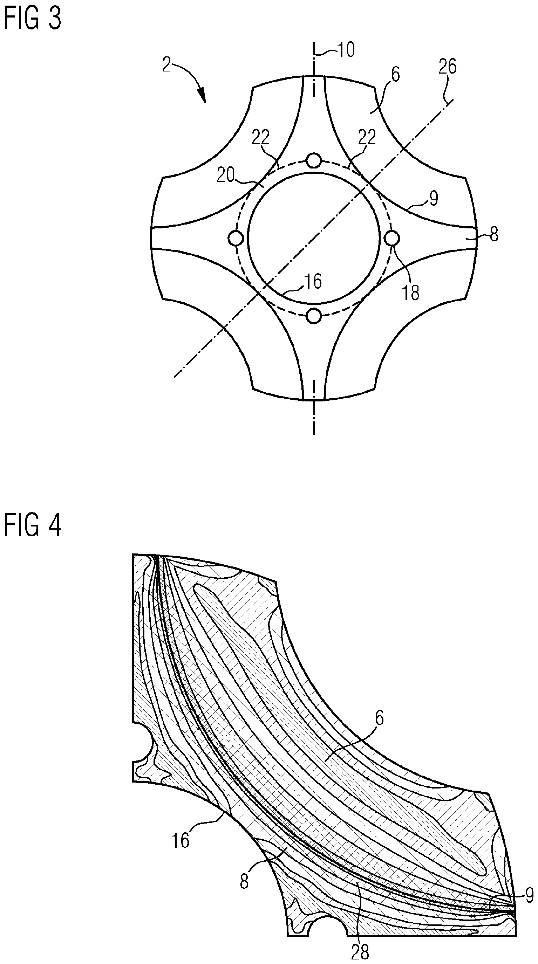

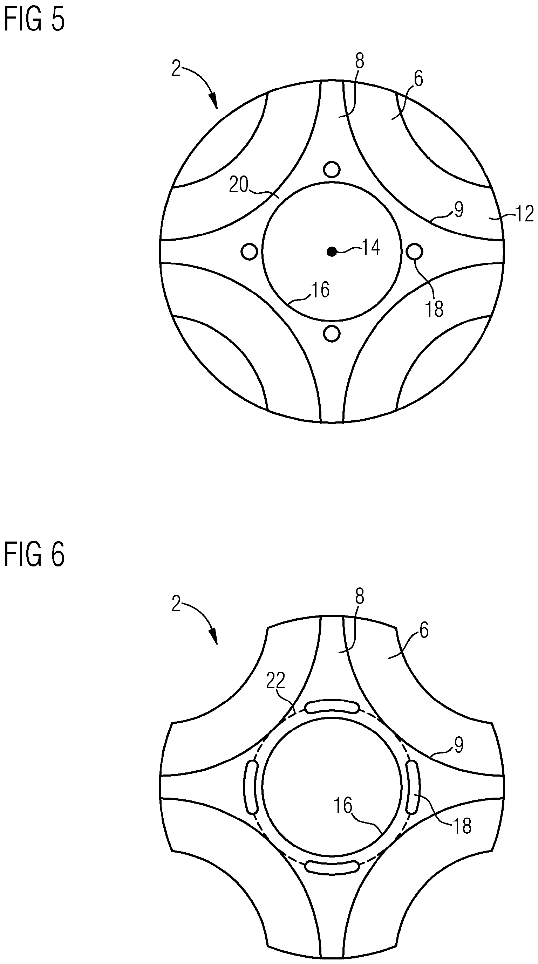

In Figur 3 und in Figur 5, sowie Figur 6 ist jeweils ein Magnetblech 2 dargestellt, das ebenfalls zwei Materialkomponenten aufweist: eine erste Materialkomponente 6 und eine zweite Materialkomponente 8. Dabei handelt es sich bei der ersten Materialkomponente 6 um einen magnetischen Werkstoff, der aus 99 Gew.-% Eisen besteht. Ein derartiger Eisen-Werkstoff hat eine sehr gute Sättigungsmagnetisierung bei einem ferritischen Gefüge und hat dabei sehr gute weichmagnetische Eigenschaften, d. h. je nach magnetischer Induktion aus dem Stator der elektrischen Maschine lässt sich das Material der ersten Materialkomponente 6 leicht ummagnetisieren.

Ferner umfasst das Magnetblech 2 einen amagnetischen Bereich, der in einer zweiten Materialkomponente 8 vorliegt. Dabei handelt es sich um eine Eisen-Chrom-Legierung mit einem Chromanteil von 10 Gew.-% bis 18 Gew.%, ggf bis - 28 Gew.-%, die ferner einen Nickelanteil zwischen 6 und 8 Gew.-% aufweist.

Nickelanteile unter 18 Gew.-% haben sich für den Sinterprozess als vorteilhafter herausgestellt. Es handelt sich dabei um einen austenitischen Edelstahl, der eine besonders hohe Festigkeit aufweist. Daher liegt diese amagnetische Materialkomponente 8 insbesondere entlang von sogenannten d-Achsen 10 vor, die wiederum magnetische Bereiche 12 die die erste Materialkomponente 6 umfassen, einschließen. Die amagnetischen Bereiche mit der zweiten Materialkomponente 8 bilden somit eine mechanisch tragende Grundstruktur des Magnetblech 2, die insbesondere bei hohen Rotationsgeschwindigkeiten die mechanische Festigkeit des Magnetblechs 2 gewährleistet.

Ein weiterer Vorteil dieser konstruktiven Anordnung der amagnetischen Bereiche 8, die die magnetischen Bereiche 12 einschließen, liegt darin, dass, wie bereits erwähnt, Streuflüsse durch die magnetische Komponente 6, wie dies bei Monomaterialien unweigerlich der Fall ist, vermieden werden. Daraus resultiert ein geringerer Drehwiderstand des Rotors und ein höheres Drehmoment, was in der praktischen Anwendung einer elektrischen Maschine von erheblicher Bedeutung ist. Der Wirkungsgrad der elektrischen Maschine wird dadurch erhöht.

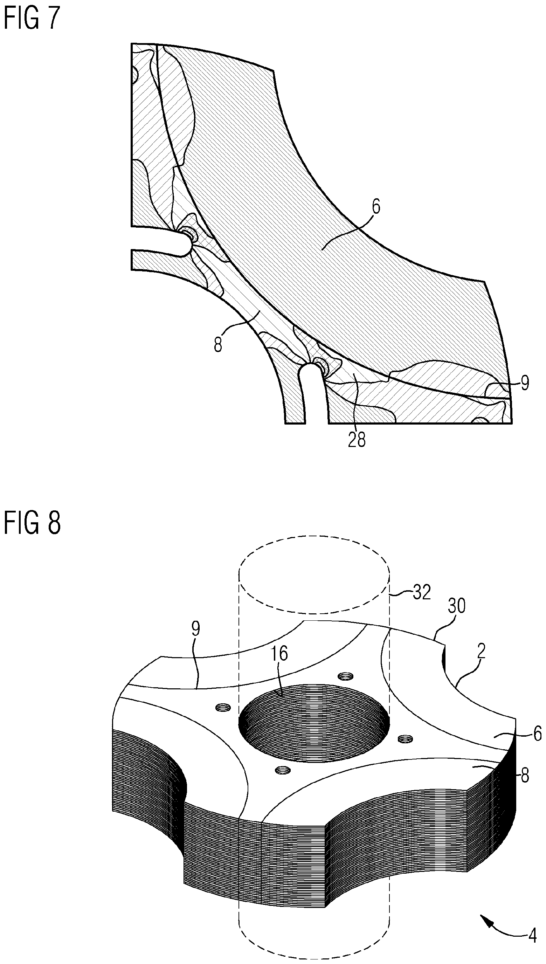

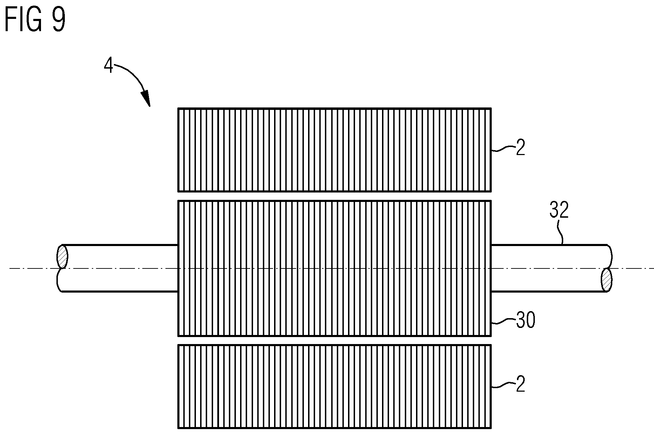

Während des Betriebs eines Rotors 4 (Figur 8 und 9) einer elektrischen Maschine treten Temperaturen von bis zu 100° C auf. Somit ist es zweckmäßig, Maßnahmen zur Entlastung von Spannungen 28' an den Grenzlinien 9 zu ergreifen. Simulationsberechnungen der mechanischen und thermischen Spannungen 28 in dem Magnetblech 2 haben ergeben, dass Entlastungsaussparungen 18, die auf der d-Achse liegen und zu dieser symmetrisch sind, diese erheblich reduzieren können. Dies ist schematisch in Figur 4 und 7 wiedergegeben, in denen zu erkennen ist, dass die Spannungen 28 dort wesentlich geringer sind und homogener verteilt sind, als dies gemäß dem Stand der Technik in Figur 2 gezeigt ist.

Figur 5 unterscheidet sich von Figur 3 darin, dass Bereiche 13, die radial außerhalb der magnetischen Bereiche 12 liegen, ebenfalls durch das amagnetische Material der zweiten Materialkomponente 8 ausgestaltet sind. Somit wird die rotationssymmetrische Form des Magnetblech zu einer Kreisform ergänzt. Durch diese Maßnahme werden Luftverwirbelungen bei der rotierenden Bewegung des Rotors deutlich reduziert, was zu einer Erhöhung des Drehmoments und zu einer Geräuschreduktion beiträgt.

In Figur 7 ist das Spannungsbild eines Magnetblechs 2 gemäß Figur 6 gezeigt, das ebenfalls Entlastungsaussparungen 18 aufweist, die symmetrisch zu der d-Achse angeordnet sind, diese sind jedoch in Form von Ringsegmenten ausgestaltet, wobei diese ringsegmentförmigen Entlastungsaussparungen 18 auf einem bezüglich der Wellenbohrung 16 konzentrischen Kreis 22 liegen. Dieser konzentrische Kreis 22 tangiert dabei im Idealfall die Grenzlinie 9 zwischen dem amagnetischen Bereich 8 sowie den magnetischen Bereich 12. Es kann jedoch auch zweckmäßig sein, diesen konzentrischen Kreis 22 radial etwas zu vergrößern oder zu verkleinern, sodass der radiale Abstand von der Tangentensituation bis zu 5 % des Gesamtradius des Magnetblechs 2 ausmacht. In diesem Bereich haben sich die besten Ergebnisse zur Reduktion der Spannungen 28 an der Grenzlinie 9 durch eine Simulation errechnen lassen.

In Figur 8 ist der weitere Weg des Magnetblechs 2 zur Zusammensetzung zu einem Rotor 4 dargestellt. Die Magnetbleche 2 werden zu einem Blechpaket 30, also zu einem Magnetblechstapel, zusammengestapelt, wobei die hier nicht dargestellten Grenzflächen zwischen den Magnetblechen 2 durch eine elektrische Isolationsschicht, die beispielsweise auf die Magnetbleche 2 aufgesprüht wird, gegeneinander elektrisch isoliert werden. Es handelt sich bei Figur 8 um eine dreidimensionale vereinfachte Darstellung, die Entlastungsaussparungen 18 wie in den Figuren 3 und 5 enthält.

In einem weiteren Schritt gemäß Figur 8 wird dem Blechpaket 30 eine Welle 32 zugeführt, wobei es sich bei dieser Darstellung um eine Schnittdarstellung durch einen Rotor 4 für eine elektrische Maschine handelt. Insbesondere bei der dreidimensionalen Darstellung gemäß Figur 7 wird ein Blechpaket 30 bzw. ein Rotor 4 für einen Reluktanzmotor dargestellt.

Herkömmliche Monomaterial-Magnetbleche nach dem Stand der Technik werden bekannterweise durch Ausstanzen dieser Bleche aus einem Endlosblech-Material, einem gewalzten Blech, erzeugt. Es ist offensichtlich, dass ein Magnetblech 2 mit mindestens zwei Komponenten 6 und 8, wie es in den vorangegangenen Figuren beschrieben ist, sich über einen Ausstanz-Vorgang in dieser Form nicht darstellen lässt. Daher wird bezüglich Figur 9 auf einen typischen Herstellungsweg für ein beschriebenes Magnetblech 2 eingegangen.

Das beschriebene Magnetblech 2 wird durch ein additives Verfahren, insbesondere durch ein Schablonendruckverfahren, insbesondere ein Siebdruckverfahren, hergestellt. Hierbei wird eine Schablone 36 mit einem Sieb an Schablonenaussparungen auf ein Substrat 40 aufgelegt und mittels eines Rakels 38 eine Paste 42, 44 mit funktionalen metallischen Komponenten und mit Bindemitteln durch die Schablonenaussparungen bzw. durch das Sieb (Siebdruck), gepresst. In Figur 9a sind dabei zwei Pastenanteile, eine Paste 42 mit der ersten Komponente und eine Paste 44 mit der zweite Komponente, dargestellt. Die zweite Komponente entspricht dabei der Vorstufe der amagnetischen zweiten Materialkomponente 8 des fertigen Magnetblechs 2, die erste Komponente entsprechend der ersten, magnetischen Komponente 6. Die Figur 9a ist insofern vereinfacht dargestellt, da mindestens zwei Vorgänge zum Aufbringen der Pasten 42 und 44 notwendig sind. Zuerst wird beispielsweise die Paste 42 aufgebracht, in einem zweiten Druckschritt die Paste 44. Dabei kann beispielsweise das Substrat von einer Schablone 36 zur nächsten Schablone 36 überführt werden, oder die Schablonen 36 werden während eines kontinuierlichen Produktionsprozesses sequenziell ausgetauscht.

Nachdem ein derartiger Grünkörper 52, der also die Rohpasten 42 und 44 umfasst, gedruckt ist, wird dieser einer ausführlichen Temperaturbehandlung unterzogen. Zunächst wird ein Trocknungsprozess 48 in einem Durchlaufofen 46 vorgenommen, bei dem organische Bestandteile aus den Pasten 42 und 44 sowie Lösungsmittel, wie Wasser ausgedampft werden bzw. thermisch zersetzt werden. In einer bevorzugten Form des Durchlaufofens 46 wird in einem zweiten Teil des Ofens 46 ein Sinterprozess 50 durchgeführt. Der Grünkörper 52 wird auf einem Förderband 54 in eine höhere Temperaturzone befördert, wobei der Sinterprozess 50 im Grünkörper 52 stattfindet.

Unter einem Sinterprozess wird dabei ein im Wesentlichen diffusionsgesteuerter Prozess zur Ausbildung eines monolithischen Materials verstanden. An Grenzflächen zwischen einzelnen Körnern bzw. metallischen Partikeln, die in den Pasten 42 und 44 enthalten sind, wird Material durch Diffusionsprozesse ausgetauscht. Der Sinterprozess unterscheidet sich von einem Schmelzprozess insbesondere dadurch, dass, wenn überhaupt, nur in sehr begrenztem Maße eine flüssige Phase je nach Phasendiagramm der verwendeten Legierung auftritt. Es bleibt jedoch dabei jeweils die Formstabilität des Grünkörpers 52, der dabei in das Magnetblech übergeht, gewährleistet.

Das so erzeugte Magnetblech wird ggf. durch einen Stanzprozess nachbearbeitet und gemäß Figur 9c mittels eines Roboters 56 zu einem Magnetblechstapel 30 bzw. einem Blechpaket gestapelt. Die Figuren 9a - 9c sind dabei sehr schematisch dargestellt und umfassen bei Weitem nicht alle Prozessschritte im Detail. Auch alternative Fertigungsverfahren, was die additive Fertigung gemäß Figur 9a sowie die Sinterprozess-Durchführung gemäß Figur 9b angeht, sind möglich

Auch das Einbringen der Entlastungsaussparungen 18 kann durch verschiedene Prozesse realisiert werden. Zum einen ist es möglich, bereits beim Schablonendruck 34 die Entlastungsaussparungen 18 in dem so entstehenden Grünkörper auszusparen. Dies ist durch ein entsprechendes Schablonendesign möglich. Andererseits ist es auch möglich, die Entlastungsaussparungen 18 abschließend auszustanzen.

### Bezugszeichenliste

- 2: Magnetblech
- 4: Rotor
- 6: erste Materialkomponente
- 8: zweite Materialkomponente
- 9: Grenzlinie
- 10: d-Achse
- 12: magnetischer Bereich
- 13: radial äußere Bereiche
- 14: Magnetblech Mittelpunkt
- 16: Wellenbohrung
- 18: Entlastungsaussparungen
- 20: amagnetischer Materialbereich
- 22: konzentrischer Kreis
- 24: amagnetischer Bereich
- 26: q-Achsen
- 28: mechanische Spannungen
- 30: Blechpaket
- 32: Welle
- 34: Schablonendruck
- 36: Schablone
- 38: Rakel
- 40: Substrat
- 42: Paste Komponente 1
- 44: Paste Komponente 2
- 46: Durchlaufofen
- 48: Trockenprozess
- 50: Sinterprozess
- 52: Grünkörper
- 54: Förderband
- 56: Roboter

## Patentansprüche

1. Rotationssymmetrisches Magnetblech für einen Rotor eines Elektromotors, insbesondere eines Reluktanzmotors,
- das aus mindestens zwei Materialkomponenten (6, 8) zusammengesetzt ist,
- einer ersten Materialkomponente (6), die einen weichmagnetischen Werkstoff umfasst und
- einer zweiten Materialkomponente (8) die einen amagnetischen Werkstoff umfasst,
- wobei die zweite Materialkomponente (8) diametral entlang einer Achse, einer sogenannten d-Achse (10) verläuft, wobei mindestens zwei dieser d-Achsen (10) vorgesehen sind,
- die wiederum mindestens vier magnetische Bereiche (12) einschließen, die jeweils durch die weichmagnetische erste Materialkomponente (6) ausgebildet sind,
- die bezüglich eines Magnetblechmittelpunktes (14), der auch den Mittelpunkt einer Wellenbohrung (16) des Magnetblechs (2) bildet, konkav bogenförmig verlaufen,
**dadurch gekennzeichnet, dass**
- mindestens eine Entlastungsaussparungen (18) vorgesehen ist, die von der d-Achse (10) geschnitten wird und zu dieser symmetrisch ist, wobei
- die Wellenbohrung (16) und die Entlastungsaussparung (18) durch einen amagnetischen Materialbereich (20) voneinander getrennt sind.

2. Magnetblech nach Anspruch 1, **dadurch gekennzeichnet, dass** die Entlastungsaussparung (18) bezüglich des Magnetblechmittelpunktes (14) konvex geformt ist.

3. Magnetblech nach Anspruch 2, **dadurch gekennzeichnet, dass** die Entlastungsaussparung (18) in Form von Ringsegmenten ausgebildet sind die konzentrisch zur Wellenbohrung (16) verlaufen.

4. Magnetblech nach Anspruch 2 oder 3, **dadurch gekennzeichnet, dass** die Entlastungsaussparungen (18) auf einem konzentrischen Kreis (22) liegen, der um die Wellenbohrung (16) verläuft.

5. Magnetblech nach einem der vorhergehenden Ansprüche, **dadurch gekennzeichnet, dass** die Entlastungsaussparung in ihrer größten Ausdehnung 1 % des Magnetblechdurchmessers, insbesondere 2 % überschreitet.

6. Magnetblech nach einem der vorhergehenden Ansprüche, **dadurch gekennzeichnet, dass** die Entlastungsaussparung nicht größer als 10 % insbesondere nicht größer als 5 % des Magnetblechdurchmesser ist.

7. Magnetblech nach einem der Ansprüche 1 bis 3, **dadurch gekennzeichnet, dass** die Winkelhalbierenden zweier benachbarter d-Achsen (10) als q-Achsen (26) bezeichnet sind und die magnetischen Bereiche (12) symmetrisch zu den q-Achsen (16) ausgestaltet sind.

8. Magnetblech nach einem der vorhergehenden Ansprüche, **dadurch gekennzeichnet, dass** die Sättigungsmagnetisierung des weichmagnetischen Werkstoffs der ersten Materialkomponente (6) weniger als 10 % der Sättigungsmagnetisierung des amagnetischen Werkstoffs der zweiten Materialkomponente (8) beträgt.

9. Magnetblech nach einem der vorhergehenden Ansprüche, **dadurch gekennzeichnet, dass** die erste, weichmagnetische Materialkomponente (6) einen Eisenanteil aufweist, der höher als 95 Gew. %, insbesondere höher als 98 Gew. % ist.

10. Magnetblech nach einem der vorhergehenden Ansprüche, **dadurch gekennzeichnet, dass** die zweite, amagnetische Materialkomponente (8) eine Eisen-Chrom-Legierung ist, die einen Chromanteil zwischen 10 Gew. % und 20 Gew. %, insbesondere zwischen 12 Gew. % und 18 Gew. % beträgt.

11. Magnetblech nach Anspruch 10, **dadurch gekennzeichnet, dass** die Eisen-Chrom-Legierung der der zweiten Materialkomponente (8) einen Nickelanteil zwischen 4 Gew. % und 10 Gew. %, insbesondere zwischen 6 Gew. % und 8 Gew. % beträgt.

12. Magnetblech nach Anspruch 10 oder 11, **dadurch gekennzeichnet, dass** die Eisen-Chrom-Legierung einen Molybdänanteil zwischen 2 Gew. % und 5 Gew. %, insbesondere zwischen 3 Gew. % und 4 Gew. % beträgt.

13. Magnetblech nach einem der Ansprüche 10 bis 12, **dadurch gekennzeichnet, dass** die Eisen-Chrom-Legierung einen Wolframanteil zwischen 0,3 Gew. % und 1,2 Gew. %, insbesondere zwischen 0,5 Gew. % und 1 Gew. % beträgt.

14. Rotor eines Reluktanzmotors umfassend einen Stapel von Magnetblechen nach einem der Ansprüche 1 bis 13.

15. Reluktanzmotor umfassend einen Rotor (4) nach Anspruch 14.
